Europäisches Patentamt

European Patent Office

Office européen des brevets

(11) Veröffentlichungsnummer: **0 325 164**
**A1**

## (12) EUROPÄISCHE PATENTANMELDUNG

(21) Anmeldenummer: **89100469.9**

(22) Anmeldetag: **12.01.89**

(51) Int. Cl.⁴: **H01Q 1/24**

(30) Priorität: **21.01.88 DE 3801619**

(43) Veröffentlichungstag der Anmeldung:
**26.07.89 Patentblatt 89/30**

(84) Benannte Vertragsstaaten:
**ES GR**

(71) Anmelder: **Deutsche Thomson-Brandt GmbH**
**Hermann-Schwer-Strasse 3 Postfach 1307**
**D-7730 Villingen-Schwenningen(DE)**

(72) Erfinder: **Geiger, Erich, Dipl.-Ing.**
**Panoramaweg 19**
**D-7734 Unterkirnach(DE)**

(74) Vertreter: **Körner, Peter, Dipl.-Ing.**
**Deutsche Thomson-Brandt GmbH Patent-**
**und Lizenzabteilung Göttinger Chaussee 76**
**D-3000 Hannover 91(DE)**

(54) **Empfangseinrichtung für Satellitensignale.**

(57) Satellitenempfangsantenne, einem mit einer Stromversorgung verbundenen Empfangskonverter sowie Empfänger.

Die Satellitenempfangsantenne ist an der Rückseite des Empfängers, vorzugsweise als integraler Bestandteil des Gehäuses ausgebildet.

Die Einrichtung ist besonders für ortsveränderliche Fernsehempfänger geeignet, die zum Satellitendirektempfang vorbereitet sind.

Fig.1

EP 0 325 164 A1

## Empfangseinrichtung für Satellitensignale

Die Erfindung betrifft eine Empfangseinrichtung für Satellitensignale nach dem Oberbegriff des Anspruchs 1.

Für den Empfang von Satellitensignalen werden Empfangseinrichtungen benötigt, die von den üblichen terrestrischen Empfangseinrichtungen in der technischen Konzeption und konstruktiven Ausgestaltung abweichen. Die Satellitensignale werden im Gigahertzbereich, vorzugsweise im 12-GHz-Bereich ausgestrahlt. Zum Empfang dienen Antennen, die durch eine Bündelung einen sehr hohen Antennengewinn erzielen und einen sehr geringen Öffnungswinkel aufweisen. Diese Antennen müssen genau auf den Satelliten ausgerichtet werden, damit bei den empfangenen Signalen ein ausreichender Stör- und Rauschabstand erzielt wird, der einen einwandfreien Empfang ermöglicht. Mit der Einführung leistungsstarker Direktempfangssatelliten wird es möglich, Satellitenprogramme auch als Endteilnehmer empfangen zu können. Dafür ist bisher eine Empfangseinrichtung erforderlich, die aus einer im Freien aufzustellenden Richtantenne besteht und einen Empfangskonverter aufweist, der die Signale in einen niedrigeren Frequenzbereich umsetzt, so daß sie weitgehend verlustfrei über Kabel zum Empfangsgerät geleitet oder in ein Hausverteilungsnetz eingespeist werden können.

Der Nachteil derartiger Einrichtungen besteht darin, daß zwischen der Antenne und dem Empfangsgerät größere Entfernungen überbrückt werden müssen, die die Stromversorgung des in der Nähe der Antenne zu installierenden Empfangskonverters erschwert und auch die Änderung der Ausrichtung der Antenne auf die gewünschten Satelliten einschränkt. Hier muß der Endteilnehmer entweder mit einem einzigen Satelliten vorlieb nehmen oder eine kostspielige Fernsteuereinrichtung betreiben, die ihrerseits auch wieder Steuerleitungen und eine Stromversorgung benötigt. Außerdem sind derartige Anlagen in der Regel ortsfest.

Der Erfindung liegt die Aufgabe zugrunde, eine Empfangseinrichtung nach dem Oberbegriff des Anspruchs 1 derart zu verbessern, daß die Übertragungsverluste verringert, die Stromversorgung vereinfacht und die Möglichkeit besteht, die Ausrichtung der Antenne auf den Satelliten zu korrigieren oder auf andere Satelliten zu ändern.

Diese Aufgabe wird bei einer Empfangseinrichtung nach dem Oberbegriff des Anspruchs 1 durch die im kennzeichnenden Teil angegebenen Merkmale gelöst.

Unter Empfangseinrichtung im Sinne der Erfindung werden sowohl Fernseh- als auch Hörrundfunkempfangseinrichtungen verstanden. Die Erfindung zentralisiert die für die Empfangseinrichtung benötigten Baugruppen, so daß lange Übertragungswege für die Nutzsignale und für die Stromversorgung des Empfangskonverters entfallen können. Außerdem kann die Antenne wahlweise auf verschiedene Satelliten ausgerichtet werden, wobei die optimale Ausrichtung an Hand der Wiedergabequalität des Empfängers ständig kontrolliert werden kann. Dabei läßt sich auch eine Feinabstimmung vornehmen, die evtl. Toleranzen der konstruktiven Ausgestaltung der Antenne und ein damit verbundenes "Schielen" ausgleicht.

Die Empfangseinrichtung ist besonders im Freien anwendbar, wo außer Luft keine absorbierende oder reflektierende Materie zwischen der Empfangsantenne und dem Satelliten vorhanden ist. Es ist aber auch ein Empfang in Innenräumen möglich, wenn z.B. die Antenne durch ein Fenster auf den Satelliten gerichtet wird, so daß als absorbierende Materialien nur die Glasscheiben im Übertragungsweg liegen und somit nur eine geringe Dämpfung entsteht. Die Ausrichtung der Antenne auf den Satelliten kann im Neigungswinkel durch Schwenken der Antenne und im Azimut durch Drehen des gesamten Gerätes mitsamt der damit verbundenen Antenne erfolgen. Alternativ kann auch vorgesehen sein, die Antenne als Rucksack am Gehäuse des Empfängers anzubringen und bei ungünstigen räumlichen Verhältnissen abgesetzt vom Gerät anzuordnen, z.B. auf eine Fensterband zu stellen oder an die Wand zu hängen.

Weiterbildungen und vorteilhafte Ausführungsformen der Erfindung ergeben sich aus den Ansprüchen, der weiteren Beschreibung und der Zeichnung, die ein Ausführungsbeispiel veranschaulicht.

In der Zeichnungen zeigen:

Fig. 1 eine als teilweisen Schnitt dargestellte Seiten ansicht einer mit einem Fernsehempfänger ausgestatteten Empfangseinrichtung in einer ersten Ausgestaltung und

Fig. 2 die Empfangseinrichtung in einer zweiten Ausgestaltung.

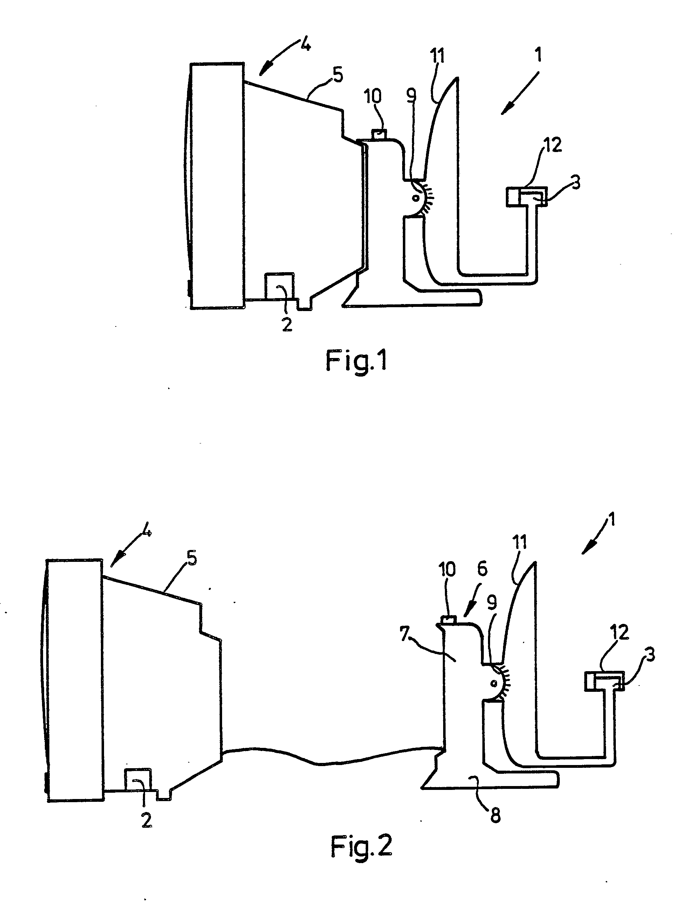

Die Empfangseinrichtung in Fig. 1 umfaßt eine Satellitenempfangsantenne 1, eine Stromversorgung 2, einen Empfangskonverter 3 und einen Fernsehempfänger 4. Der Fernsehempfänger 4 besitzt ein Gehäuse 5, dessen integraler Bestandteil die Antenne 1 ist. Bei der in Fig. 2 dargestellten alternativen Ausführungsform ist die Antenne 1 als abnehmbarer Rucksack 6 am Gehäuse 5 des Fernsehempfängers 4 angebracht. Der Rucksack 6 umfaßt ein Gehäuse 7, das einen Standfuß 8 und/oder eine Anhängevorrichtung umfaßt. Die Ausführung gemäß Fig. 1 kommt für einfache Anwendungen, besonders bei ortsbeweglichen Geräten in Betracht. Die Ausführung gemäß Fig. 2 ist dagegen für im wesentlichen als ortsfeste Geräte eingesetzte Empfangseinrichtungen gedacht. Hierbei besteht die Möglichkeit, einerseits gemäß Fig. 1, die Antenne an der Rückseite des Fernsehempfängers 4 befestigt zu lassen und die ganze Anordnung durch Drehen auf den Satelliten auszurichten oder andererseits gemäß Fig. 2 vom Fernsehempfänger 4 abgesetzt zu betreiben.

Da je nach Längengrad des Satellitenstandortes bzw. Breiten und Längengrades der Empfangseinrichtung unterschiedlichen Elevationswinkel erforderlich sind, ist die Antenne 1 im Elevationswinkel schwenkbar ausgebildet. Die Einstellung wird dadurch eine Elevationsskala 9 vereinfacht, wobei die entsprechenden Werte für ausgewählte Direktempfangssatelliten in einer Tabelle aufgeführt oder aber auch an der Skala 9 angebracht sein können. Zur Erzielung des richtigen Azimut dient ein Kompaß 10, für den ebenfalls Werte in einer Tabelle zusammengestellt sein können.

Die Antenne 1 selbst besteht aus einem Reflektor 11, z.B. einem Parabelspiegel, und einer vor dem Reflektor 11 angeordneten Einspeisseinheit 12. Die Einspeisseinheit 12 ist steckbar oder klappbar am Reflektor 11 angeordnet. Beim Transport der Empfangseinrichtung kann sie so in eine an dem Gehäuse 5 anliegende Lage gebracht werden, so daß sie vor Beschädigung geschützt ist. Die Einspeiseeinheit 12 umfaßt einen Hornstrahler 13 und den Empfangskonverter 3, der über ein kurzes Kabel mit dem Fernsehempfänger 4 verbunden ist. Die Stromversorgung 2 für den Empfangskonverter 3 in der Einspeiseeinheit 12 ist im Fernsehempfänger 4 unterbegracht. Der Empfangskonverter 3 kann so ausgebildet sein, daß er den empfangenen Frequenzbereich direkt in einen Bereich umsetzt, der vom Empfangsgerät verarbeitet werden kann. Es entfällt damit der bei bekannten Empfangseinrichtungen zusätzliche Konverter, der das Signal von einem Zwischenbereich in den endgültigen Empfangsbereich umsetzt. Dadurch wird einmal die Entstehung unerwünschter Mischprodukte verhindert, die eventuell an anderer Stelle zu Störungen führen können. Außerdem wird die Empfangseinrichtung im schaltungstechnischen Aufwand sehr vereinfacht. Durch die kurzen Übertragungswege ist die Kabeldämpfung der Verbindungskabel unbeachtlich, so daß zusätzliche Verstärker zum Ausgleich der Kabeldämpfung entfallen können.

Neben der gegenüber bekannten Empfangseinrichtungen vorhandenen Beweglichkeit der erfindungsgemäßen Empfangseinrichtung ist als zusätzlicher Vorteil hervorzuheben, daß die Empfangseinrichtung bei Betrieb in Innenräumen keinen Witterungseinflüssen ausgesetzt ist. Somit unterliegen die elektrischen und mechanischen Eigenschaften der Antenne keiner witterungsbedingten Verschlechterung und kostspielige Witterungsschutzmaßnahmen können entfallen.

**Ansprüche**

1. Empfangseinrichtung für Satellitensignale, welche eine Satellitenempfangsantenne (1), einen mit einer Stromversorgung (2) verbundenen Empfangskonverter (3) sowie einen Empfänger (4) umfaßt, **dadurch gekennzeichnet,** daß die Satellitenempfangsantenne (1) an der Rückseite des Empfängers (4) angeordnet ist.

2. Empfangseinrichtung nach Anspruch 1, **dadurch gekennzeichnet,** daß die Antenne (1) integral als Bestandteil des Gehäuses (5) des Empfängers (4) ausgebildet ist.

3. Empfangseinrichtung nach Anspruch 1, **dadurch gekennzeichnet,** daß die Antenne (1) als abnehmbarer Rucksack (6) am Gehäuse (5) des Empfängers (4) angebracht ist.

4. Empfangseinrichtung nach Anspruch 3, **dadurch gekennzeichnet,** daß der Rucksack (6) ein Gehäuse (7) mit einem Standfuß (8) oder einer Anhängevorrichtung umfaßt.

5. Empfangseinrichtung nach einem oder mehreren der Ansprüche 1 bis 4, **dadurch gekennzeichnet,** daß die Antenne (1) im Elevationswinkel schwenkbar ausgebildet ist.

6. Empfangseinrichtung nach Anspruch 5, **dadurch gekennzeichnet,** daß die Antenne (1) mit einer Elevationsskale (9) ausgestattet ist.

7. Empfangseinrichtung nach einem oder mehreren der Ansprüche 1 bis 6, **dadurch gekennzeichnet,** daß die Antenne (1) mit einem Kompaß (10) ausgestattet ist.

8. Empfangseinrichtung nach einem oder mehreren der Ansprüche 1 bis 7, **dadurch gekennzeichnet,** daß die Antenne (1) aus einem Reflektor (11) und einer Einspeiseeinheit (12) besteht und daß die Einspeiseeinheit (12) klappbar oder steckbar am Reflektor (11) der Antenne (1), am Gehäuse (5) des Empfängers (4) oder am Gehäuse (13) des Rucksacks (6) befestigt ist.

9. Empfangseinrichtung nach Anspruch 8, **dadurch gekennzeichnet,** daß die Einspeiseeinheit (12) einen Hornstrahler (13) und den Empfangskonverter (3) umfaßt.

10. Empfangseinrichtung nach einem oder mehreren der Ansprüche 1 bis 9, **dadurch gekennzeichnet,** daß die Stromversorgung (2) für den Empfangskonverter (3) im Empfänger (4) angeordnet ist.

Fig.1

Fig.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | PATENT ABSTRACTS OF JAPAN, Band 3, Nr. 136 (E-151), 13. November 1979; & JP-A-54 114 066 (NIPPON DENSHIN DENWA KOSHA) 09-05-1979 --- | 1,2,5 | H 01 Q 1/24 |
| A | US-A-2 413 558 (DE WITT et al.) * Insgesamt * --- | 1,2,8 | |
| A | FR-A-1 165 492 (COMPAGNIE FRANCAISE THOMSON-HOUSTON) * Insgesamt * --- | 1 | |
| A | DE-A-2 240 893 (GRÜNZWEIG & HARTMANN) --- | | |
| A | DE-U-8 520 603 (ANT NACHRICHTENTECHNIK et al.) ----- | | |

**RECHERCHIERTE SACHGEBIETE (Int. Cl.4)**

H 01 Q

Der vorliegende Recherchenbericht wurde für alle Patentansprüche erstellt

| Recherchenort | Abschlußdatum der Recherche | Prüfer |
|---|---|---|
| DEN HAAG | 13-04-1989 | CHAIX DE LAVARENE C.P.H. |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes
   Dokument

EPO FORM 1503 03.82 (P0403)